# DEMANDE DE BREVET EUROPEEN

(11) **EP 0 723 860 A1**
(43) Date de publication de la demande: **31.07.1996**
(21) Numéro de dépôt: 96400060.8
(22) Date de dépôt: 10.01.1996
(51) Int. Cl.: B32B 27/08

(54) **Matériau d'emballage comprenant une couche d'oxyde de silicium et une couche de polyoléfine**

(30) Priorité: 26.01.1995 FR 9500879
(71) Demandeur: ELF ATOCHEM S.A., F-92800 Puteaux, Hauts de Seine (FR)
(72) Inventeur: Breant, Patrice, F-27470 Serquigny (FR); Tordjeman, Philippe, F-64140 Billere (FR)
(74) Mandataire: Neel, Henry

(57) **Abrégé**

L'invention concerne un matériau comprenant un film recouvert d'oxyde de silicium et un film de polyoléfine tel que le liant disposé entre l'oxyde de silicium et le film de polyoléfine est une résine thermoplastique contenant au moins une fonction hydroxyle.

Ce matériau est utile pour fabriquer des emballages alimentaires en forme de briques.

## Description

La présente invention concerne un matériau d'emballage comprenant une couche d'oxyde de silicium et une couche de polyoléfine.

Elle concerne plus particulièrement une structure comprenant un film recouvert d'oxyde de silicium et un film de polyoléfine, un liant d'adhésion étant disposé entre l'oxyde de silicium et le film de polyoléfine. On peut, par exemple, du côté du film de polyoléfine coller à chaud ce matériau sur du carton, puis recouvrir chaque face de l'ensemble obtenu avec une feuille de polyéthylène.

Ces matériaux sont utiles pour fabriquer des emballages de liquides alimentaires en forme de briques.

La demanderesse a maintenant découvert que des liants à base de polymères contenant des fonctions hydroxyles permettaient de faire des matériaux indélaminables.

JP 03099842 (KOKAI) publié le 25 Avril 1991 décrit des films d'EVOH/Vinyl silane recouverts d'oxyde de silicium sur lesquels on colle une feuille de polypropylène à l'aide d'un adhésif uréthane. Il est difficile de déposer un adhésif de façon régulière et continue en quantité suffisante. Le résultat est soit un manque d'adhésion, soit un excès d'adhésif qui abime le matériau.

JP 05330568 (KOKAI) publié le 14 Décembre 1993 décrit des films de polyester recouverts de silice sur lesquels on colle une feuille de résine éthylénique à l'aide d'un adhésif qui est un copolymère éthylène-anhydride maléique- acrylate d'éthyle. L'adhésion n'est pas suffisante.

La présente invention est un matériau comprenant un film recouvert d'oxyde de silicium et un film de polyoléfine tel que le liant disposé entre l'oxyde de silicium et le film de polyoléfine est une résine thermoplastique contenant au moins une fonction hydroxyle.

Le film recouvert d'oxyde de silicium est connu de l'art antérieur. C'est par exemple, un film de polyester tel que le polyéthylène téréphtalate (PET) ou le polybutylène téréphtalate (PBT) ou de polyamide (PA).

Le film d'oxyde de silicium est par exemple une couche monomoléculaire ou une couche jusqu'à 5 000 angströms d'épaisseur. Elle peut être déposée par un plasma, une évaporation ou tout autre moyen.

A titre d'exemple, l'épaisseur du film recouvert d'oxyde de silicium est comprise entre 5 et 200 µm.

Le film de polyoléfine est par exemple en polyéthylène, polypropylène ou des copolymères de l'éthylène tels que des copolymères éthylène/propylène, éthylène/butène, éthylène/héxène ou éthylène/propylène/butène ou copolymères de l'éthylène avec au moins un produit choisi parmi (i) les esters vinyliques d'acides carboxyliques saturés, (ii) les ester et les sels d'acides carboxyliques insaturés.

On ne sortirait pas du cadre de l'invention si le film comprenait en plus d'une polyoléfine d'autres polymères, éventuellement des agents compatibilisants pour que le mélange soit suffisamment homogène pour être transformé et utilisé sous forme de film. Il peut comprendre aussi un mélange de polyoléfines.

A titre d'exemple, l'épaisseur de ce film peut être comprise entre 5 et 5 000 µm. La résine thermoplastique contenant au moins une fonction hydroxyle peut être un polymère ayant une fonction hydroxyle, un mélange de polymères ayant chacun au moins une fonction hydroxyle ou un mélange d'un polymère ayant au moins une fonction hydroxyle avec un autre polymère ou toute autre combinaison.

Avantageusement, la résine comprend des motifs dérivés d'au moins une oléfine ou des chaînes de polyoléfines.

La fonction hydroxyle est intégrée au polymère soit par polymérisation ou par greffage d'un ou de plusieurs monomères appropriés, soit par modification chimique d'une fonction appropriée déjà présente dans le polymère.

Les différentes réactions (polymérisation, greffage ou modification) sont faites selon les règles de l'art à l'état solide, fondu ou en solution.

La fonction hydroxyle est généralement apportée soit par des monomères acryliques fonctionnels comme par exemple le HEA ou le HEMA (acrylate ou méthacrylate d'hydroxyéthyle), soit par des alcools portant une fonction polymérisable ou greffable (par exemple vinylique) comme par exemple le vinylphénol. Ces monomères peuvent également porter d'autres fonctionnalités peu ou pas réactives avec les fonctions hydroxyles comme une amide, une amine,.....

La fonction hydroxyle peut également être obtenue à partir d'une fonction appropriée déjà présente dans le polymère par l'intermédiaire d'une réaction appropriée comme par exemple l'hydrolyse catalysée d'une fonction alkylate de vinyle.

D'autres monomères peuvent également être présents dans le polymère comme une ou plusieurs oléfines (éthylène, propylène, butène, héxène, octène, méthyl-4 pentène, vinylnorbornène, etc....), un acrylate ou un méthacrylate d'alkyle, un alkyle de vinyle. Ces monomères peuvent être conjointement présents.

Les produits obtenus peuvent être utilisés seuls ou en mélange avec des polymères contenant ou ne contenant pas eux-mêmes de fonctions hydroxyles. L'emploi d'un additif ou d'un autre polymère peut être nécessaire dans le cas des mélanges pour assurer un bon mélangeage et une bonne compatibilisation des polymères.

Les polyacrylates ou polyméthacrylates d'hydroxyéthyle ne sont pas toujours thermoplastiques. Il est donc avantageux de les mélanger avec d'autres polymères pour que la résine ait un caractère thermoplastique. La résine étant thermoplastique peut être facilement transformée en film pour être par exemple coextrudée avec la polyoléfine. Le bicouche polyoléfine / résine comprenant des hydroxyles est ensuite collé à chaud sur le film recouvert d'oxyde de silicium pour fabriquer le matériau de l'invention.

On peut aussi, même si le polymère ayant au moins une fonction hydroxyle est thermoplastique, le mélanger avec d'autres polymères thermoplastiques.

A titre d'exemples de polymères pouvant être mélangés avec les polymères ayant une fonction hydroxyle, on peut citer :
- le polyéthylène, le polypropylène ;
- les copolymères de l'éthylène avec au moins un produit choisi parmi (i) les sels et les esters d'acides carboxyliques insaturés, (ii) les esters vinyliques d'acides carboxyliques saturés, (iii) les alpha oléfines, les monomères (i) à (iii) pouvant être greffés ou copolymérisés ;
- les copolymères blocs styrène / éthylène-butène / styrène (SEBS) ;
- les copolymères blocs styrène / butadiène / styrène (SBS) ;
- les copolymères blocs styrène / isoprène / styrène (SIS).

La composition des mélanges, la teneur en comonomère, la quantité de fonctions hydroxyles et la structure des polymères est optimisée au regard des propriétés d'adhésion et de mise en oeuvre souhaitées.

Il peut être nécessaire d'ajouter dans la résine des agents compatilibilisants pour favoriser l'homogénéité de la résine. Ces produits sont connus en soi, ce sont par exemple des polyoléfines fonctionnalisées telles que les copolymères de l'éthylène avec au moins un produit choisi parmi (i) les acides carboxyliques insaturés, leurs sels, leurs esters, (ii) les acides dicarboxyliques insaturés, leurs sels, leurs esters, leurs hémiesters, leurs anhydrides, (iii) les esters vinyliques d'acide carboxyliques saturés, (iv) les époxydes insaturés, (v) les alpha oléfines, les monomères (i) à (v) pouvant être greffés ou copolymérisés.

A titre d'exemple de résines thermoplastiques contenant au moins une fonction hydroxyle, on peut citer :
- les mélanges :
   ∗ de copolymères éthylène / alcool vinylique (EVOH) ou de poly(méth)acrylate d'hydroxyéthyle ; et d'au moins un produit choisi parmi :
   ∗ les copolymères de l'éthylène avec au moins un produit choisi parmi (i) les acides carboxyliques insaturés, leurs sels, leurs esters, (ii) les acides dicarboxyliques insaturés, leurs sels, leurs esters, leurs hémiesters, leurs anhydrides, (iii) les esters vinyliques d'acide carboxyliques saturés, (iv) les époxydes insaturés, les monomères (i) à (iv) pouvant être greffés ou copolymérisés ;
   ∗ les polyéthylènes, les copolymères d'éthylène et d'alpha oléfines
- les mélanges de :
   ∗ polyéthylène ou de copolymère de l'éthylène avec des esters d'acides carboxyliques insaturés ou de copolymères de l'éthylène avec des esters vinyliques d'acides carboxyliques saturés ;
   ∗ de polyéthylène ou copolymères de l'éthylène et d'alphaoléfines ;
      ces polymères étant l'un ou l'autre ou les deux séparément ou simultanément greffés avec du (méth)acrylate d'hydroxyéthyle ;
- les copolymères éthylène / acétate de vinyle en partie ou en totalité hydrolysés, ces copolymères pouvant aussi contenir du (méth)acrylate d'alkyle.

On utilise avantageusement les résines suivantes :
- les mélanges de :
   ∗ copolymères éthylène / (méth)acrylate d'alkyle ;
   ∗ EVOH
   ∗ copolymères éthylène / (méth)acrylate d'alkyle / anhydride maléique ou (méth)acrylate de glycidyle ;
- les mélanges de :
   ∗ copolymères éthylène / (méth)acrylate d'alkyle ou polyéthylène ;
   ∗ EVOH
   ∗ polyéthylène (par exemple linéaire basse densité) greffé par l'anhydride maléique ;
   ∗ élastomère EPR (éthylène propylène) ;
- les mélanges de :
   ∗ copolymères éthylène / (méth)acrylate d'alkyle ;
   ∗ poly(méth)acrylate d'hydroxyéthyle ;
- les mélanges de :
   ∗ copolymères éthylène / (méth)acrylate d'alkyle ;
   ∗ copolymère éthylène / alphaoléfines ;
      ces copolymères étant l'un ou l'autre ou les deux séparément ou simultanément greffés par du (méth)acrylate d'hydroxyéthyle.
- les copolymères éthylène / acétate de vinyle / alcool vinylique / (méth)acrylate d'alkyle.

A titre d'exemple, l'épaisseur de ce film de liant peut être comprise entre 5 et 50 µm.

Les polymères du film recouvert d'oxyde de silicium, du film de polyoléfine et de la résine thermoplastique contenant au moins une fonction hydroxyle, peuvent comprendre tous les additifs qui pourraient être utilisés pour en améliorer la tenue thermique, la tenue UV ou la mise en oeuvre par exemple (antioxydant, antiUV, processing-aid, charge minérale, etc....).

Les matériaux de l'invention peuvent être fabriqués selon les techniques connues des thermoplastiques.

Le film recouvert d'oxyde de silicium peut être laminé avec un film bicouche polyoléfine / résine à fonction hydroxyle.

Les matériaux de l'invention peuvent être utilisés tels quels ou bien associés à d'autres matériaux tels que des films ou des feuilles de polymères, de carton par scellage à chaud, collage ou coextrusion pour faire des emballages alimentaires.

### Exemples

Les Melt Flow Index (MFI) sont exprimés en dg/mn sous 2,16 kg à 190° C.

On a utilisé les produits suivants :
- le LOTADER A est un copolymère éthylène / acrylate de butyle / anhydride maléique à 5 % en poids d'acrylate et 3 % en poids d'anhydride et de MFI = 5.
- l'OREVAC A est un polyéthylène greffé par 0,3 % en poids d'anhydride maléique et de MFI = 1 ;
- le SOARNOL A est un EVOH à 44 % d'éthylène de MFI = 4 ;
- le PARATONE 8900 est un EPR de Mn = 20000 à 30 % de propylène ;
- le LACQTENE LA0710 est un polyéthylène radicalaire haute pression autoclave de MFi = 7 et de densité = 0,917 g/cm³ ;
- le 15MA03 est un copolymère éthylène / acrylate de méthyle à 15 % d'acrylate de méthyle de MFI = 3 ;
- le STAMYLEX est le 080876F, copolymère linéaire d'éthylène et d'octène de densité 0.910 g/cm³ et de MFi = 6. Il a été greffé simultanément avec le 15MA03 par le HEA en présence de peroxyde de dicumyle. Le polymère obtenu contient en poids 89 % de copolymères d'éthylène et 11 % de greffons.
- EVAOH désigne un EVA (éthylène / acétate de vinyle) à 28 % masse d'acétate partiellement hydrolysé par transestérification en présence de dilauratedibutylétain et de butanol.

### Exemple 1

On a préparé les résines suivantes :

| | | |
|---|---|---|
| **POLYMERES** | **COMPOSITIONS en % Poids** | **Force de pelage N/25 mm** |
| 15MA03 | 65 | indélaminable |
| EVOH = SOARNOL A | 30 | |
| LOTADER A | 5 | |
| 15MA03 | 40 | " |
| EVOH = SOARNOL A | 50 | |
| LOTADER A | 10 | |
| LACQTENE LA710 | 30 | " |
| EPR = Paratone | 10 | |
| EVOH = SOARNOL A | 50 | |
| OREVAC A | 10 | |
| 15MA03 + STAMYLEX | 90 | " |
| greffon HEA | 10 | |
| EVAOH | 100 | 1,5 |

On a préparé des bobines de film PET revêtu d'oxyde de silicium. La couche d'oxyde de silicium déposée en plasma fait 200 angströms et le PET 12 µm.

On a préparé différents liants qu'on a soit coextrudés, soit thermoscellés sur les films précédents. L'adhésion a été mesurée par pelage du film de liant et du film PET recouvert d'oxyde de silicium à la vitesse de 100 mm/mn pour 25 mm de largeur.

Quand il a été impossible de délaminer le film de liant du film PET recouvert d'oxyde de silicium, il y a eu rupture du film de PET.

A titre de comparaison, on a préparé trois autres liants constitués des polymères suivants et ne contenant pas de fonctions hydroxyles :
- **29MA03** identique au 15MA03 sauf qu'il contient 29 % d'acrylate de méthyle.
- **LOTADER****B** identique au LOTADER A sauf que la température de fusion et le point VICAT sont 20° C plus bas.
- **OREVAC B** est un copolymère éthylène / acrylate de méthyle à 29 % d'acrylate greffé par l'anhydride maléique.

On a obtenu les forces de pelage suivantes :

| **LIANTS** | **29MA03** | **LOTADER B** | **OREVAC B** |
|---|---|---|---|
| Force de pelage (N/25 mm) | < 0.5 | 3 | 1.2 |

Ces liants ne sont pas de très bons liants d'adhésion.

## Revendications

1. Matériau comprenant un film recouvert d'oxyde de silicium et un film de polyoléfine tel que le liant disposé entre l'oxyde de silicium et le film de polyoléfine est une résine thermoplastique contenant au moins une fonction hydroxyle.

2. Matériau selon la revendication 1 dans lequel le film recouvert d'oxyde de silicium est en polyéthylène téréphtalate et le film de polyoléfine est en polyéthylène ou en copolymère de l'éthylène.

3. Matériau selon la revendication 1 ou 2 dans lequel la fonction hydroxyle du liant provient de l'alcool vinylique ou du (méth)acrylate d'hydroxyéthyle.

4. Emballage comprenant un matériau selon l'une des revendications 1 à 3.
